# EUROPÄISCHE PATENTSCHRIFT

(11) **EP 3 737 846 B1**
(45) Veröffentlichungstag und Bekanntmachung des Hinweises auf die Patenterteilung: **20.10.2021**
(21) Anmeldenummer: 19700333.8
(22) Anmeldetag: 04.01.2019
(51) Int. Cl.: F02B 37/00, F02B 39/00, F02M 35/12, F02M 35/14, F02C 6/12, F04D 29/42, F04D 29/66, F04D 29/70

(54) **FILTERSCHALLDÄMPFER FÜR EINEN ABGASTURBOLADER EINER BRENNKRAFTMASCHINE**
FILTER MUFFLER FOR A TURBOCHARGER OF AN INTERNAL COMBUSTION ENGINE
SILENCIEUX DE FILTRE POUR TURBOCOMPRESSEUR DE MOTEUR A COMBUSTION INTERNE

(30) Priorität: 10.01.2018 DE 102018100465
(43) Veröffentlichungstag der Anmeldung: 18.11.2020
(73) Patentinhaber: ABB Schweiz AG, 5400 Baden (CH)
(72) Erfinder: JARUSEL, Matthias, 79774 Albbruck (DE); SPINDER, Carsten, 79618 Rheinfelden (DE)
(74) Vertreter: Zimmermann & Partner Patentanwälte mbB
(86) Internationale Anmeldenummer: PCT/EP2019/050163
(87) Internationale Veröffentlichungsnummer: WO 2019/137855

(56) Entgegenhaltungen:
- EP-A1- 1 885 999
- DE-A1- 10 225 092
- DE-A1-102015 014 550
- JP-A- 2008 215 124
- US-A- 5 756 944

## Beschreibung

### TECHNISCHES GEBIET

Die Erfindung bezieht sich auf das Gebiet der Abgasturbolader für aufgeladene Brennkraftmaschinen. Insbesondere betrifft die Erfindung einen Filterschalldämpfer für eine Brennkraftmaschine mit einem Abgasturbolader. Ferner betrifft die Erfindung eine Brennkraftmaschine mit einem in der vorliegenden Offenbarung beschriebenen Filterschalldämpfer.

### TECHNISCHER HINTERGRUND

Für die Leistungssteigerung einer Brennkraftmaschine werden heutzutage standardmäßig Abgasturbolader eingesetzt, mit einer Turbine im Abgastrakt der Verbrennungskraftmaschine und mit einem der Verbrennungskraftmaschine vorgelagerten Verdichter. Die Abgase der Brennkraftmaschine werden dabei in der Turbine entspannt. Die dabei gewonnene Arbeit wird mittels einer Welle auf den Verdichter übertragen, welcher die der Brennkraftmaschine zugeführte Luft verdichtet. Durch die Verwendung der Energie der Abgase zur Verdichtung der dem Verbrennungsprozess in der Brennkraftmaschine zugeführten Luft, können der Verbrennungsprozess und der Wirkungsgrad der Brennkraftmaschine optimiert werden.

Im Betrieb des Abgasturboladers entstehen typischerweise vorwiegend im Verdichterrad Schallwellen unerwünscht hoher Amplitude, die durch den Luftansaugkanal an die Umgebung freigesetzt werden. Diese Schallwellen werden daher üblicherweise mittels eines Filterschalldämpfers gedämpft.

Aus dem Stand der Technik sind Filterschalldämpfer bekannt, die typischerweise auf der Ansaugseite eines Verdichters eingesetzt werden, der die Verbrennungsluft komprimiert und einem Verbrennungsmotor zuführt. Angetrieben wird ein derartiger Verdichter von der Abgasturbine eines Abgasturboladers.

Üblicherweise sind die Filterschalldämpfer derart ausgebildet, dass Umgebungsluft durch einen am Umfang eines Filterschalldämpfers angeordneten Filter in einen mit Dämpfungselementen ausgestatteten Innenraum des Filterschalldämpfers eingeleitet werden kann, anschließend an den Dämpfungselementen vorbei strömt, und dabei zum Verdichterrad, von dem entgegen der Luftströmung Schallwellen ausgehen, durch Leitelemente umgelenkt wird. Die Schalldämpfung erfolgt an den Dämpfungselementen dissipativ, indem die Schallenergie unmittelbar durch poröse oder faserige Absorptionsmaterialien, aus denen die Dämpfungselemente im Wesentlichen aufgebaut sind, in Wärme umgesetzt wird.

Beispielsweise ist in der Patentanmeldung EP 0 740 080 A2 ein Filterschalldämpfer beschrieben, der aus einem gegossenen Monoblock besteht, und in dessen strahlenförmigen Rippen mit Nuten die Dämpfungselemente angeordnet sind. Ein Filterrahmen, bestehend aus einem abnehmbaren Lochblechteil, umgibt den Filterschalldämpfer in der Art, dass die Dämpfungselemente gegen radiales Herausfallen gesichert werden. Das Lochblechteil ist mittels Verbindungselementen ringförmig um den Filterschalldämpfer angeordnet. Ein scheibenförmiges Dämpfungselement besteht aus vier Dämpfungssegmenten, die zusammengesetzt eine Ringfläche darstellen. Ein Absorptionselement wird von zwei gestanzten Lochblechen gehalten, und bildet so ein Dämpfungssegment, das in die Nuten der oben erwähnten Rippen des gegossenen Monoblocks radial eingeführt wird.

Weitere Filterschalldämpfer sind bekannt aus DE 10225092 A1, JP 2008215124 A, EP 1885999 B1, US 5756944 A und DE 102015014550 A1.

Es hat sich herausgestellt, dass mit den aus dem Stand der Technik bekannten Filterschalldämpfer, insbesondere bei hohen Strömungs-geschwindigkeiten, noch keine optimale Schalldämpfung erzielt wird. Ferner hat sich herausgestellt, dass die konventionellen Filterschalldämpfer gewisse Nachteile hinsichtlich erforderlicher Bauraumgröße als auch hinsichtlich Herstellungs- und Montageaufwand und den damit verbundenen Kosten aufweisen.

### KURZE DARSTELLUNG DER ERFINDUNG

Die Aufgabe der vorliegenden Erfindung besteht darin, einen Filterschalldämpfer bereitzustellen, der mindestens hinsichtlich einem der obengenannten Nachteile der aus dem Stand der Technik bekannten Filterschalldämpfer verbessert ist. Insbesondere besteht eine Aufgabe der vorliegenden Erfindung darin, einen Filterschalldämpfer bereitzustellen, der im Vergleich zu den aus dem Stand der Technik bekannten Filterschalldämpfer eine kompaktere Bauraumgröße aufweist. Eine weitere Aufgabe der vorliegenden Erfindung besteht darin, einen Filterschalldämpfer bereitzustellen für den der Herstellungsaufwand und/oder Montageaufwand und/oder Wartungsaufwand reduziert ist, um einen kostengünstigeren Filterschalldämpfer bereitzustellen.

Zur Lösung der obengenannten Aufgabe wird ein Filterschalldämpfer gemäß dem unabhängigen Anspruch 1 bereitgestellt. Weitere Aspekte, Vorteile und Merkmale der vorliegenden Erfindung sind den abhängigen Patentansprüchen, der Beschreibung und den beiliegenden Figuren zu entnehmen.

Gemäß einem Aspekt der Erfindung wird ein Filterschalldämpfer bereitgestellt, welcher ein Frontelement, ein Rückelement, und eine Vielzahl von Dämpfungselementen umfasst. Die Vielzahl von Dämpfungselementen ist zwischen dem Frontelement und dem Rückelement angeordnet. Mindestens ein Dämpfungselement der Vielzahl von Dämpfungselementen weist eine Verbindungsöffnung auf, durch die sich ein Verbindungselement erstreckt. Das Verbindungselement verbindet das Frontelement mit dem Rückelement. An einer Seite des Frontelements, welche dem Rückelement gegenüberliegt, ist eine erste Führungsvorrichtung für die Dämpfungselemente vorgesehen. Zusätzlich oder alternativ ist an einer Seite des Rückelements, welche dem Frontelement gegenüberliegt, eine zweite Führungsvorrichtung für die Dämpfungselemente vorgesehen. Das mindestens eine Dämpfungselement der Vielzahl von Dämpfungselementen ist nach Entfernung des Verbindungselements radial entfernbar.

Somit wird vorteilhafterweise ein Filterschalldämpfer bereitgestellt, der gegenüber den aus dem Stand der Technik bekannten Filterschalldämpfern verbessert ist. Insbesondere wird durch den erfindungsgemäßen Filterschalldämpfer ein Filterschalldämpfer bereitgestellt, der vorteilhafterweise derart ausgestaltet ist, dass die Dämpfungselemente (auch als Kulissen bezeichnet) einfacher ausgetauscht werden können. Insbesondere können die Dämpfungselemente auch in einem Zustand ausgetauscht werden, indem der Filterschalldämpfer mit einem Verdichter verbunden ist.

Gemäß einem weiteren Aspekt der Erfindung wird ein Abgasturbolader mit einem Filterschalldämpfer gemäß einer der hierin beschriebenen Ausführungsformen bereitgestellt, wobei der Filterschalldämpfer auf der Ansaugseite eines Verdichters des Abgasturboladers angeordnet ist. Somit kann vorteilhafterweise ein verbesserter Abgasturbolader bereitgestellt werden.

Gemäß einem weiteren Aspekt der Erfindung wird eine Brennkraftmaschine mit einem hierin beschriebenen Abgasturbolader bereitgestellt, so dass vorteilhafterweise eine verbesserte Brennkraftmaschine bereitgestellt werden kann.

### KURZBESCHREIBUNG DER FIGUREN

Im Weiteren soll die Erfindung anhand von in Figuren dargestellten Ausführungsbeispielen erläutert werden, aus denen sich weitere Vorteile und Abwandlungen ergeben. Hierbei zeigt:
- Figur 1: eine schematische perspektivische Schnittansicht eines Filterschalldämpfers gemäß hierin beschriebenen Ausführungsformen, der auf einer Ansaugseite eines Verdichters angeordnet ist;
- Figur 2A: eine schematische perspektivische Ansicht einer Vielzahl von Dämpfungselementen eines Filterschalldämpfers gemäß hierin beschriebenen Ausführungsformen;
- Figur 2B: ein vergrößerter Ausschnitt der in Figur 2A dargestellten Vielzahl von Dämpfungselementen des Filterschalldämpfers gemäß hierin beschriebenen Ausführungsformen;
- Figur 3A und B: schematische perspektivische Ansichten eines Frontelements und eines Rückelements mit einer Führungsvorrichtung für die Dämpfungselemente eines Filterschalldämpfers gemäß hierin beschriebenen Ausführungsformen;
- Figur 4: eine schematische perspektivische Ansicht einer Anordnung von als Diffusoren ausgebildeten Verbindungselementen eines Filterschalldämpfers gemäß hierin beschriebenen Ausführungsformen;
- Figur 5A: eine schematische perspektivische Ansicht eines Filterschalldämpfers gemäß hierin beschriebenen Ausführungsformen; und
- Figur 5B: eine schematische perspektivische Ansicht eines Filterschalldämpfers gemäß Figur 6A mit einem Filterblech.

### DETAILLIERTE BESCHREIBUNG DER FIGUREN

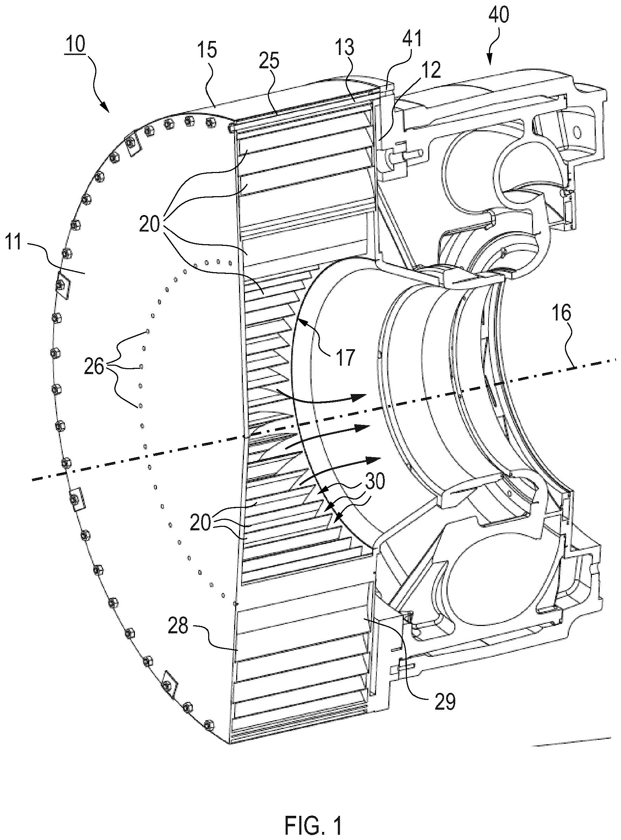

Figur 1 zeigt eine schematische perspektivische Schnittansicht eines Filterschalldämpfers 10 gemäß hierin beschriebenen Ausführungsformen. Insbesondere zeigt Figur 1 einen Filterschalldämpfer 10, der auf einer Ansaugseite eines Verdichters 40 angeordnet ist. Der dargestellte Filterschalldämpfer ist zylinderförmig ausgebildet.

Wie beispielhaft in Figur 1 gezeigt ist, umfasst der erfindungsgemäße Filterschalldämpfer 10 ein Frontelement 11, ein Rückelement 12, und eine Vielzahl von Dämpfungselementen 20. Die Vielzahl von Dämpfungselementen 20 ist zwischen dem Frontelement 11 und dem Rückelement 12 angeordnet. Mindestens ein Dämpfungselement der Vielzahl von Dämpfungselementen weist eine Verbindungsöffnung 25 auf, durch die sich ein Verbindungselement 13 erstreckt, welches das Frontelement 11 mit dem Rückelement 12 verbindet.

Gemäß einer Ausführungsform, die mit anderen hierin beschriebenen Ausführungsformen kombiniert werden kann, ist das mindestens eine Dämpfungselement der Vielzahl von Dämpfungselementen 20 nach Entfernung des Verbindungselements 13 radial entfernbar. Mit anderen Worten, nach Entfernung der jeweiligen Verbindungselemente 13 sind die entsprechenden jeweiligen Dämpfungselemente 20 radial entfernbar. Dies hat den Vorteil, dass einzelne Dämpfungselemente individuell auswechselbar sind. Insbesondere können die einzelne Dämpfungselemente vorteilhafterweise ausgetauscht werden ohne den Filterschalldämpfer demontieren zu müssen, wie es bei konventionellen Filterschalldämpfern typsicherweise der Fall ist. Das Frontelement 11 kann eine Frontplatte sein. Zum Beispiel kann die Frontplatte in Form einer Scheibe, insbesondere einer kreisrunden Scheibe, ausgebildet sein, wie es beispielhaft in Figur 1 dargestellt ist. Das Rückelement 12 kann eine Rückplatte sein, insbesondere eine Rückplatte mit einer zentralen Öffnung 17 als Luftaustrittsöffnung. Die Rückplatte kann in Form einer Scheibe, insbesondere einer kreisrunden Scheibe, mit zentraler Öffnung ausgebildet sein. Beispielsweise kann die Rückplatte um die zentrale Öffnung 17 herum ringförmig ausgestaltet sein, wie es in Figur 1 dargestellt ist. Die Luftströmungsrichtung von den zwischen den Dämpfungselementen 20 ausgebildeten Strömungskanälen 30 durch die Luftaustrittsöffnung des Rückelements in den Verdichter ist in Figur 1 mit Pfeilen angedeutet.

Wie beispielhaft in Figur 1 dargestellt ist, sind die Dämpfungselemente 20 typischerweise radial um eine Zentralachse 16 des Filterschalldämpfers angeordnet. Typischerweise sind die Dämpfungselemente 20 gleichmäßig um die Zentralachse 16 des Filterschalldämpfers herum angeordnet. Insbesondere sind ein erstes Ende 28 der jeweiligen Dämpfungselemente mit dem Frontelement 11 und ein zweites Ende 29 der jeweiligen Dämpfungselemente mit dem Rückelement 12 in Kontakt.

Gemäß einer Ausführungsform, die mit anderen hierin beschriebenen Ausführungsformen kombiniert werden kann, ist die Verbindungsöffnung 25 in mindestens einem Dämpfungselement 20 in einem radial äußeren Bereich des Filterschalldämpfers angeordnet. Typischerweise verläuft die Verbindungsöffnung 25 parallel zur Zentralachse 16 des Filterschalldämpfers, wie es beispielhaft in Figur 1 dargestellt ist. Insbesondere ist die Verbindungsöffnung 25 eines hierein beschriebenen Dämpfungselements auf einer Einströmseite des Dämpfungselements, d.h. im Einströmbereich des Filterschalldämpfers, angeordnet.

Gemäß einer Ausführungsform, die mit anderen hierin beschriebenen Ausführungsformen kombiniert werden kann, wird die Verbindungsöffnung 25 durch ein Rohrelement gebildet. Beispielsweise, kann das Rohrelement in radial äußeren Bereich des Dämpfungselements angeordnet sein. Der Ausdruck "radial äußere Bereich" bezieht sich in der vorliegenden Offenbarung auf den Einströmbereich des Filterschalldämpfers.

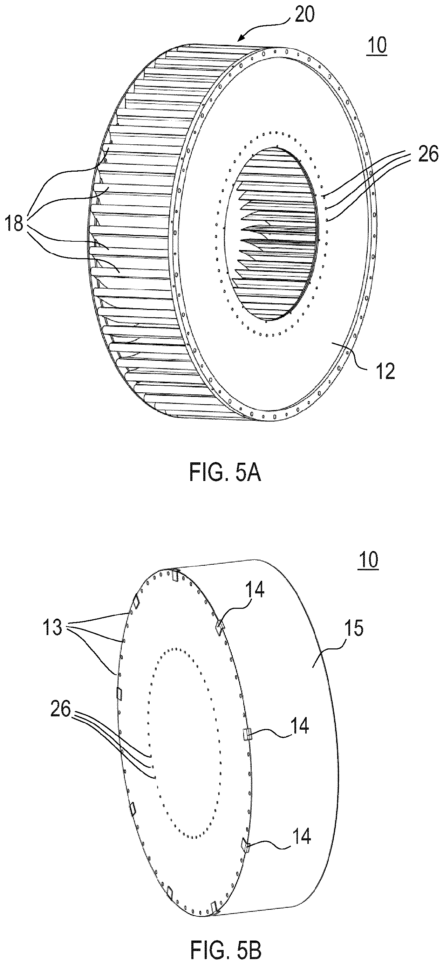

In der schematischen perspektivischen Ansicht des Filterschalldämpfers in Fig. 5A sind die Rohrelemente 18, welche die Verbindungsöffnung 25 bereitstellen können, schematisch dargestellt.

Gemäß einer Ausführungsform, die mit anderen hierin beschriebenen Ausführungsformen kombiniert werden kann, hat das Rohrelement (bzw. die jeweiligen Rohrelemente) einen Außendurchmesser Dₐ von 10 mm ≤ Dₐ ≤ 40 mm, insbesondere 15 mm ≤ Dₐ ≤ 30 mm, insbesondere 17 mm ≤ Dₐ ≤ 25 mm, beispielsweise einen Außendurchmesser Dₐ = 20 mm ± 0,6 mm. Das Rohrelement kann eine Wandstärke von 1,5 mm ± 0,5 mm aufweisen. Typischerweise ist das Rohrelement aus Stahl.

Gemäß einer Ausführungsform, die mit anderen hierin beschriebenen Ausführungsformen kombiniert werden kann, sind in mindestens 50 % der Dämpfungselemente, z. B. in allen Dämpfungselementen der Vielzahl von Dämpfungselementen, entsprechende Verbindungsöffnungen 25 vorgesehen, die beispielsweise durch die Rohrelemente 18 bereitgestellt werden können.

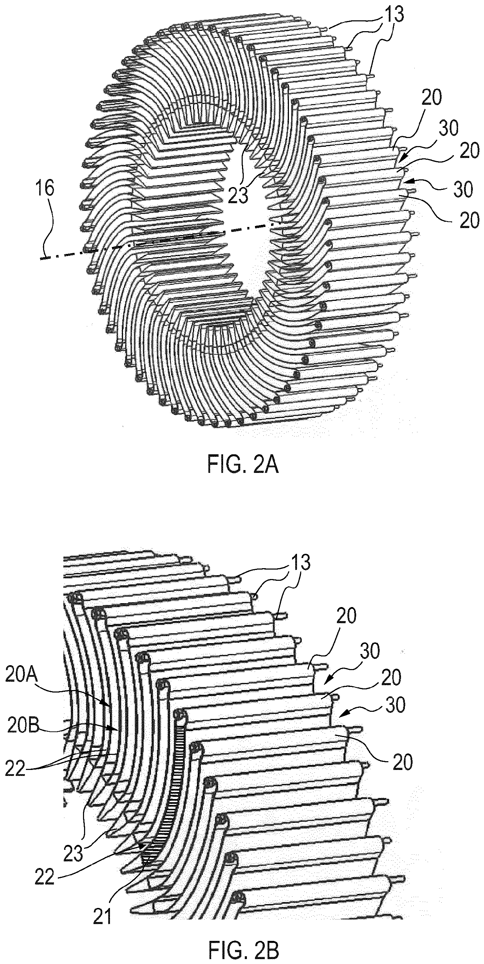

Mit anderen Worten, gemäß einer Ausführungsform, die mit anderen hierin beschriebenen Ausführungsformen kombiniert werden kann, weist mindestens die Hälfte der Vielzahl von Dämpfungselementen 20 jeweils eine Verbindungsöffnung 25 auf, durch die sich jeweils ein Verbindungselement 13 erstreckt, welches das Frontelement 11 mit dem Rückelement 12 verbindet. Demnach sind mindestens die Hälfte der Vielzahl von Dämpfungselementen 20 nach Entfernung des jeweiligen Verbindungselements 13 radial entfernbar. Wie aus den Figuren 1, 2A und 2B ersichtlich ist, sind die Verbindungselemente 13 in den Verbindungsöffnungen 25 typischerweise in axialer Richtung, d.h. parallel zur Zentralachse 16, angeordnet.

Beispielsweise kann das Verbindungselement mit dem Rückelement verschraubt sein. Alternativ kann das Verbindungselement auch durch eine entsprechende Öffnung im Rückelement durchgeführt sein und mit einem Flansch 41 des Verdichtergehäuses verschraubt sein. Gemäß einer Ausführungsform, die mit anderen hierin beschriebenen Ausführungsformen kombiniert werden kann, ist jedes zweite in Umfangrichtung angeordnete Verbindungselement mit dem Flansch des Verdichtergehäuses verbunden. Zusätzlich können ein oder mehrere Verbindungelemente, die in Umfangsrichtung zwischen den mit dem Flansch verbundenen Verbindungselementen angeordnet sind, mit dem Rückelement 12 verbunden sein.

Demnach wird die Struktur des Filterschalldämpfers durch die axiale Verbindung, insbesondere axiale Verschraubung, des Frontelements 11 mit dem Rückelement 12 über die Verbindungselemente 13 vorteilhafterweise versteift.

Der Flansch 41 kann beispielsweise Teil eines am Verdichtergehäuse angebrachten Adapterrings sein. Der Adapterring ist typischerweise derart ausgestaltet, dass der Filterschalldämpfer daran montiert werden kann, beispielsweise über die hierin beschriebenen Verbindungselemente 13.

Insbesondere kann der Adapterring vorteilhaft sein um eine mechanische Verstärkung an der Kontaktstelle zwischen Filterschalldämpfer und dem Verdichter, beispielsweise eines Turboladers, bereitzustellen. Zur Befestigung des Filterschalldämpfers an dem Flansch 41 mittels der Verbindungselemente sind in dem Flansch typischerweise entsprechende Bohrungen mit Innengewinden (z.B. M8) vorgesehen. Dementsprechend können die Verbindungselemente Gewindestangen (z.B. M8-Gewindestangen) sein.

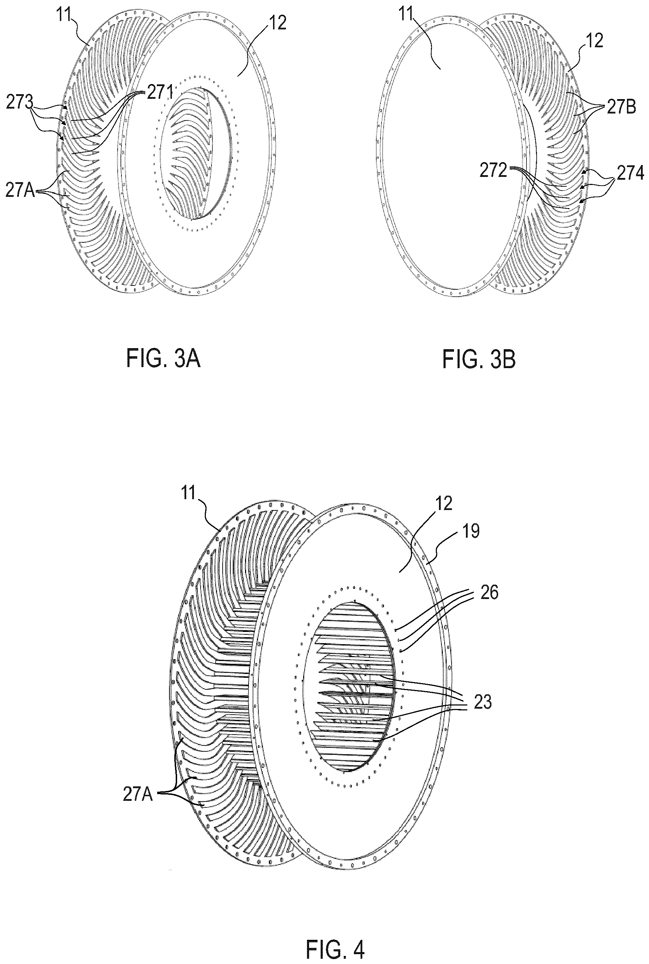

Ferner kann zur Verstärkung der mechanischen Verbindung des Filterschalldämpfers an den Verdichter am Rückelement 12 verdichterseitig ein Verstärkungsring 19 vorgesehen sein, wie es beispielhaft in Figur 4 dargestellt ist. Der Verstärkungsring 19 kann beispielsweise mittels Anschweißen eines Blechrings und anschließendem Überfräsen des Blechrings zur Beseitigung von Unebenheiten bereitgestellt werden.

Das Verbindungselement 13, welches sich durch die Verbindungsöffnung 25 erstreckt und das Frontelement mit dem Rückelement verbindet, kann beispielsweise als Verbindungsstange ausgebildet sein. Beispielsweise kann das Verbindungselement 13 an einem ersten Ende ein Außengewinde aufweisen, um das Verbindungselement beispielsweise direkt mit einem in dem Rückelement 12 vorgesehenen Innengewinde zu verschrauben. Ferner kann das Verbindungselement an einem zweiten Ende, dass dem ersten Ende gegenüberliegt, ein Außengewinde aufweisen um das Verbindungselement, beispielsweise mittels einer Schraubenmutter (z.B. einer M8-Schraubenmutter), an dem Frontelemente zu befestigen, wie es beispielhaft in Figur 1 dargestellt ist.

Beispielsweise kann das Verbindungselement 13 eine Länge L von 100 mm ≤ L ≤ 400 mm, insbesondere 150 mm ≤ L ≤ 350 mm, insbesondere 200 mm ≤ L ≤ 300 mm, beispielsweise L = 260 mm ± 20 mm, aufweisen.

Es wird darauf hingewiesen, dass die hierin beschriebenen Ausgestaltungsformen eines einzelnen Dämpfungselements 20 auch auf mindestens 50 % der Vielzahl von Dämpfungselementen des Filterschalldämpfers angewendet werden kann. Insbesondere können alle Dämpfungselemente des Filterschalldämpfers gemäß den hierin beschriebenen Ausführungsformen eines einzelnen Dämpfungselements ausgestaltet sein. Die Dämpfungselemente des hierin beschriebenen Filterschalldämpfers können auch als Kulissen bezeichnet werden.

Figur 2A zeigt eine schematische perspektivische Ansicht einer Vielzahl von Dämpfungselementen 20 eines Filterschalldämpfers 10 gemäß hierin beschriebenen Ausführungsformen und Figur 2B zeigt einen vergrößerten Ausschnitt von Figur 2A.

Wie beispielhaft in den Figuren 2A und 2B dargestellt ist, ist gemäß einer Ausführungsform, die mit anderen hierin beschriebenen Ausführungsformen kombiniert werden kann, die Vielzahl von Dämpfungselementen 20 radial um eine Zentralachse 16 des Filterschalldämpfers angeordnet, so dass jeweils zwischen benachbarten Dämpfungselementen ein Strömungskanal 30 ausgebildet wird, der zur Zentralachse 16 verläuft. Insbesondere verlaufen die jeweiligen Strömungskanäle zwischen benachbarten Dämpfungselementen von einem radial äußeren Einströmbereich des Filterschalldämpfers zu einem radial inneren Abströmbereich des Filterschalldämpfers.

Gemäß einer Ausführungsform, die mit anderen hierin beschriebenen Ausführungsformen kombiniert werden kann, umfassen die Dämpfungselemente 20 jeweils ein Absorptionselement 21, wie es beispielshaft durch die Schraffierung in Figur 2B dargestellt ist. Das Absorptionselement 21 besteht typischerweise aus einem Dämpfungsmaterial, zum Beispiel aus einem Schaumstoffmaterial oder einem Polyestervlies, insbesondere einem Glaswolle ähnlichem Polyestervlies.

Wie es beispielshaft in Figur 2B dargestellt ist, ist das Absorptionselement 21 typsicherweise zumindest teilweise von einem Dämpfungsblech 22 umgeben. Insbesondere kann das Dämpfungsblech derart ausgebildet sein, dass ein Zwischenraum zwischen den Seitenwänden eines Dämpfungselements gebildet wird. In diesem Zwischenraum kann das Absorptionselement 21 eingebracht sein.

Wie beispielhaft in den Figuren 2A und 2B dargestellt ist, können die Dämpfungselemente 20 eine konkave Dämpfungsfläche 20A und eine konvexe Dämpfungsfläche 20B aufweisen. Typischerweise wird die konkave Dämpfungsfläche 20A und die konvexe Dämpfungsfläche 20B jeweils durch ein Dämpfungsblech gebildet. Beispielsweise, können die Dämpfungsbleche, welche die konkave Dämpfungsfläche 20A und die konvexe Dämpfungsfläche 20B des Dämpfungselements bilden, mit dem Rohrelement 18 über eine Schweißverbindung verbunden sein.

Gemäß einer Ausführungsform, die mit anderen hierin beschriebenen Ausführungsformen kombiniert werden kann, besteht das hierein beschriebene Dämpfungsblech aus einem Lochblech mit einer Dicke von 0.8 oder 0.75 mm. Das Lochblech kann beispielsweise Löcher mit einem Durchmesser von 2 mm bis 5 mm aufweisen.

Gemäß einer Ausführungsform, die mit anderen hierin beschriebenen Ausführungsformen kombiniert werden kann, weisen die Dämpfungselemente 20 jeweils an ihrem zur Zentralachse 16 zeigenden Ende (d.h. im Abströmbereich) ein Diffusorelement 23 auf, wie es beispielhaft in den Figuren 2A und 2B gezeigt ist. Beispielsweise können die jeweiligen Diffusorelemente 23 jeweils mittels Befestigungselementen 26 an dem Frontelement 11 befestigt sein, wie es beispielhaft in Figur 1 und 5B dargestellt ist. Ferner können die jeweiligen Diffusorelemente 23 auch jeweils mittels Befestigungselementen 26 an dem Rückelement 12 befestigt sein, wie es beispielhaft in Figur 4 und 5A dargestellt ist. Als Befestigungselemente 26 können unlösbare Verbindungen wie Schweiß-/Löt- oder Klebeverbindungen oder auch lösbare Verbindungen, insbesondere Nieten oder Schrauben, beispielsweise M5-Schrauben, verwendet werden.

Wie aus Figur 1, 4 und 5A hervorgeht stellen die Diffusorelemente 23 üblicherweise die Kulissenaustritte bereit. Beispielsweise können die Diffusorelemente 23 aus Aluminium gefräst sein. Typischerweise sind die Diffusorelemente 23 spitzzulaufend, insbesondere dreiecksförmig, ausgebildet. Die zur Spitze verlaufenden Seiten der Diffusorelemente sind vorteilhafterweise gerade ausgebildet um ein Walzfräsen zu ermöglichen. Dies ermöglicht eine einfachere und kostengünstigere Herstellung.

Gemäß einer Ausführungsform, die mit anderen hierin beschriebenen Ausführungsformen kombiniert werden kann, sind die Diffusorelemente als Verbindungselemente ausgebildet. Insbesondere können die Diffusorelemente 23 das Frontelement 11 mit dem Rückelement 12 verbinden, wie es beispielhaft in Figur 4 dargestellt ist.

Die Figuren 3A und 3B zeigen schematische perspektivische Ansichten eines Rückelements 12 und eines Frontelements 11 mit einer Führungsvorrichtung 27A, 27B für die Dämpfungselemente eines Filterschalldämpfers gemäß hierin beschriebenen Ausführungsformen. Gemäß einer Ausführungsform, die mit anderen hierin beschriebenen Ausführungsformen kombiniert werden kann, ist an einer Seite des Frontelements 11, welche dem Rückelement 12 gegenüberliegt, eine erste Führungsvorrichtung 27A für die Dämpfungselemente 20 vorgesehen, wie es beispielhaft in Figur 3A dargestellt ist. Typischerweise, erstreckt sich die erste Führungsvorrichtung 27A von dem Frontelement 11 in Richtung des Rückelements 12. Wie in Figur 3A dargestellt ist, weist die erste Führungsvorrichtung 27A eine Vielzahl von ersten radialen Aufnahmen 271 auf. Insbesondere sind die ersten radialen Aufnahmen 271 ausgebildet, um die ersten Enden 28 der Vielzahl von Dämpfungselementen 20 radial aufzunehmen. Mit anderen Worten, zumindest die seitliche Innenkontur der ersten radialen Aufnahmen 271 entspricht typischerweise der seitlichen Außenkontur der ersten Enden 28 der Vielzahl von Dämpfungselementen 20. Insbesondere weisen die ersten radialen Aufnahmen 271 im radial äußeren Bereich erste Aufnahmeöffnungen 273 auf. Die erste Aufnahmeöffnungen 273 sind typischerweise derart ausgebildet, dass die Dämpfungselemente 20 radial montierbar und radial entfernbar sind.

Alternativ oder zusätzlich kann an einer Seite des Rückelements 12, welche dem Frontelement 11 gegenüberliegt, eine zweite Führungsvorrichtung 27B für die Dämpfungselemente 20 vorgesehen sein, wie es beispielhaft in Figur 3B gezeigt ist. Typischerweise, erstreckt sich die zweite Führungsvorrichtung 27B von dem Rückelement 12 in Richtung des Frontelements 11. Wie in Figur 3B dargestellt ist, weist die zweite Führungsvorrichtung 27B eine Vielzahl von zweiten radialen Aufnahmen 272 auf. Insbesondere sind die zweiten radialen Aufnahmen 272 ausgebildet, um die zweiten Enden 29 der Vielzahl von Dämpfungselementen 20 radial aufzunehmen. Mit anderen Worten, zumindest die seitliche Innenkontur der zweiten radialen Aufnahmen 272 entspricht typischerweise der seitlichen Außenkontur der zweiten Enden 29 der Vielzahl von Dämpfungselementen. Insbesondere weisen die zweiten radialen Aufnahmen 272 im radial äußeren Bereich zweite Aufnahmeöffnungen 274 auf. Die zweiten Aufnahmeöffnungen 274 sind typischerweise derart ausgebildet, dass die Dämpfungselemente 20 radial montierbar und radial entfernbar sind.

Beispielsweise können die an dem Frontelement angebrachte Führungsvorrichtung 27A und/oder die an dem Rückelement angebrachte zweite Führungsvorrichtung 27B aus Metall oder Kunststoff (z.B. PA66) hergestellt sein. Insbesondere können die an dem Frontelement angebrachte erste Führungsvorrichtung 27A und die an dem Rückelement angebrachte zweite Führungsvorrichtung 27B auch als Kulissenführungen bezeichnet werden. Beispielsweise können die Kulissenführungen, d.h. erste Führungsvorrichtung 27A und/oder die zweite Führungsvorrichtung 27B, eine Dicke von 4 mm oder mehr aufweisen. Insbesondere können die Kulissenführungen einteilig, d.h. aus einem Stück, ausgeführt sein.

Gemäß einer Ausführungsform, die mit anderen hierin beschriebenen Ausführungsformen kombiniert werden kann, ist die Führungsvorrichtung 27A und/oder die zweite Führungsvorrichtung 27B aus einem anderen Material als das Frontelement 11 und/oder als das Rückelement 12. Insbesondere kann das Material der ersten Führungsvorrichtung 27A und/oder der zweite Führungsvorrichtung 27B ein kostengünstigeres Material und/oder ein Material mit besseren Schalldämpfungseigenschaften als das Material des Frontelements 11 und/oder als des Rückelements 12.

Des Weiteren kann die erste Führungsvorrichtung 27A über eine Schweißverbindung oder eine Klebverbindung (z.B. mittels eines Klebers mit einer Temperatur-beständigkeit bis mindestens 200°C) an dem Frontelement befestigt sein. Auf ähnliche Weise, kann die, der am Frontelement 11 angebrachten ersten Führungsvorrichtung 27A gegenüberliegende, zweite Führungsvorrichtung 27B über eine Schweißverbindung oder eine Klebverbindung an dem Rückelement 12 befestigt sein. Alternativ oder zusätzlich können die Kulissenführungen mittels Nieten an dem Frontelement bzw. dem Rückelement befestigt sein.

Gemäß einer Ausführungsform, die mit anderen hierin beschriebenen Ausführungsformen kombiniert werden kann die erste Führungsvorrichtung 27A integral mit dem Frontelement 11 ausgeführt sein. Beispielsweise kann die die erste Führungsvorrichtung 27A in das Frontelement 11 eingefräst sein. Alternativ oder zusätzlich kann die zweite Führungsvorrichtung 27B integral mit dem Rückelement 12 ausgeführt sein. Beispielsweise kann die die zweite Führungsvorrichtung 27B in das Rückelement eingefräst sein.

Wie beispielhaft in Figur 6B schematisch dargestellt ist, umfasst der Filterschalldämpfer gemäß einer Ausführungsform, die mit anderen hierin beschriebenen Ausführungsformen kombiniert werden kann, ein Filterblech 15, welches am Umfang des Filterschalldämpfers 10 angeordnet ist. Typischerweise steht das Filterblech 15 mit dem Frontelement 11 und dem Rückelement 12 in Kontakt. Insbesondere ist das Filterblech 15 vorteilhafterweise kraftschlüssig mit dem Frontelement 11 und dem Rückelement 12 verbunden, wodurch vorteilhafterweise die Steifigkeit des Filterschalldämpfers erhöht werden kann.

Das Filterblech ist typischerweise als Lochblech ausgestaltet, insbesondere als Lochblech mit hexagonalen Löchern bzw. Öffnungen. Typischerweise, hat das Filterblech einen freien Querschnitt von ca. 80%. Die Dicke des Lochblechs kann beispielsweise 1 mm betragen. Wie beispielhaft in Figur 5B dargestellt ist, kann das Filterblech 15 mittels einem oder mehreren Halteelementen 14 gehalten werden. Das Halteelement 14 kann mit dem Frontelement 11 verbunden sein, z.B. mittels einer Schweißverbindung. Alternativ, kann das Halteelement 14 mit dem Filterblech 15 verbunden sein, z.B. mittels einer Schweißverbindung. Typischerweise ist das Halteelement winkelförmig ausgebildet, wie es z.B. in Figur 5B gezeigt ist. Somit kann das Filterblech vorteilhafterweise zu einer verbesserten Steifigkeit des Filterschalldämpfers beitragen.

Wie aus den hierin beschriebenen Ausführungsformen hervorgeht wird vorteilhafterweise ein Filterschalldämpfer bereitgestellt, der gegenüber den aus dem Stand der Technik bekannten Filterschalldämpfern verbessert ist. Insbesondere wird durch den erfindungsgemäße Filterschalldämpfer ein Filterschalldämpfer bereitgestellt, welcher eine kompaktere Bauraumgröße ermöglicht, und für den der Herstellungsaufwand, der Montageaufwands, und der Wartungsaufwand reduziert ist. Somit kann unter anderem ein kostengünstigerer Filterschalldämpfer bereitgestellt werden.

### BEZUGZEICHENLISTE

**10** Filterschalldämpfer
**11** Frontelement
**12** Rückelement
**13** Verbindungselement
**14** Halteelement
**15** Filterblech
**16** Zentralachse
**17** zentrale Öffnung
**18** Rohrelemente
**19** Verstärkungsring
**20** Dämpfungselement
**20A** konkave Dämpfungsfläche
**20B** konvexe Dämpfungsfläche
**21** Absorptionselement
**22** Dämpfungsblech
**23** Diffusorelement
**25** Verbindungsöffnung
**26** Befestigungselement
**27A** erste Führungsvorrichtung
**27B** zweite Führungsvorrichtung
**271** Vielzahl von ersten radialen Aufnahmen zur radialen Aufnahme der ersten Enden 28 der Dämpfungselemente
**272** Vielzahl von zweiten radialen Aufnahmen zur Aufnahmen der zweiten Enden 29 der Dämpfungselemente
**28** erstes Ende der Dämpfungselemente
**29** zweites Ende der Dämpfungselemente
**30** Strömungskanal
**40** Verdichter
**41** Flansch des Verdichtergehäuses

## Patentansprüche

1. Filterschalldämpfer (10), umfassend:
- ein Frontelement (11),
- ein Rückelement (12), und
- eine Vielzahl von Dämpfungselementen (20), die zwischen dem Frontelement (11) und dem Rückelement (12) angeordnet sind,
wobei mindestens ein Dämpfungselement der Vielzahl von Dämpfungselementen eine Verbindungsöffnung (25) aufweist, durch die sich ein Verbindungselement (13) erstreckt, welches das Frontelement (11) mit dem Rückelement (12) verbindet, wobei an einer Seite des Frontelements (11), welche dem Rückelement (12) gegenüberliegt, eine erste Führungsvorrichtung (27A) für die Dämpfungselemente (20) vorgesehen ist, und/oder wobei an einer Seite des Rückelements (12), welche dem Frontelement (11) gegenüberliegt, eine zweite Führungsvorrichtung (27B) für die Dämpfungselemente (20) vorgesehen ist, und wobei das mindestens eine Dämpfungselement der Vielzahl von Dämpfungselementen (20) nach Entfernung des Verbindungselements (13) radial entfernbar ist.

2. Filterschalldämpfer (10) nach Anspruch 1, wobei sich die erste Führungsvorrichtung (27A) von dem Frontelement (11) in Richtung des Rückelements (12) erstreckt, und/oder wobei sich die zweite Führungsvorrichtung (27B) von dem Rückelement (12) in Richtung des Frontelements (11) erstreckt.

3. Filterschalldämpfer (10) nach Anspruch 1 oder 2, wobei die erste Führungsvorrichtung (27A) eine Vielzahl von ersten radialen Aufnahmen (271) zur radialen Aufnahme von ersten Enden (28) der Vielzahl von Dämpfungselementen (20) aufweist, und/oder wobei die zweite Führungsvorrichtung (27B) eine Vielzahl von zweiten radialen Aufnahmen (272) zur radialen Aufnahme von zweiten Enden (29) der Vielzahl von Dämpfungselementen (20) aufweist.

4. Filterschalldämpfer (10) nach einem der Ansprüche 1 bis 3, wobei mindestens die Hälfte der Vielzahl von Dämpfungselementen jeweils eine Verbindungsöffnung (25) aufweist, durch die sich jeweils ein Verbindungselement (13) erstreckt, welches das Frontelement (11) mit dem Rückelement (12) verbindet, wobei die Hälfte der Vielzahl von Dämpfungselementen (20) nach Entfernung des jeweiligen Verbindungselements (13) radial entfernbar sind.

5. Filterschalldämpfer (10) nach einem der Ansprüche 1 bis 4, wobei das Verbindungselement (13) mit dem Rückelement (12) verschraubt ist.

6. Filterschalldämpfer (10) nach einem der Ansprüche 1 bis 5, wobei die Verbindungsöffnung (25) durch ein Rohrelement gebildet wird.

7. Filterschalldämpfer (10) nach einem der Ansprüche 1 bis 6, wobei die Vielzahl von Dämpfungselementen (20) radial um eine Zentralachse (16) des Filterschalldämpfers angeordnet sind, so dass jeweils zwischen benachbarten Dämpfungselementen ein Strömungskanal (30) ausgebildet ist, der zur Zentralachse (16) verläuft.

8. Filterschalldämpfer (10) nach einem der Ansprüche 1 bis 7, wobei die Dämpfungselemente (20) jeweils ein Absorptionselement (21) umfassen, welches zumindest teilweise von einem Dämpfungsblech (22) umgeben ist.

9. Filterschalldämpfer (10) nach einem der Ansprüche 1 bis 8, wobei die Dämpfungselemente (20) eine konkave Dämpfungsfläche (20A) und eine konvexe Dämpfungsfläche (20B) aufweisen.

10. Filterschalldämpfer (10) nach einem der Ansprüche 1 bis 9, wobei die Dämpfungselemente (20) an ihrem zur Zentralachse (16) zeigenden Ende ein Diffusorelement (23) aufweisen.

11. Filterschalldämpfer (10) nach Anspruch 10, wobei das Diffusorelement (23) mittels eines Befestigungselements (26) an dem Frontelement (11) befestigt ist.

12. Filterschalldämpfer(10) nach einem der Ansprüche 1 bis 11, ferner umfassend ein Filterblech (15), welches am Umfang des Filterschalldämpfers angeordnet ist, wobei das Filterblech (15) mit dem Frontelement (11) und dem Rückelement (12) in Kontakt steht, insbesondere wobei das Filterblech (15) mittels eines Halteelements (14), das mit dem Frontelement (11) verbunden ist, gehalten wird.

13. Filterschalldämpfer (10) nach einem der Ansprüche 1 bis 12, wobei die erste Führungsvorrichtung und/oder die zweite Führungsvorrichtung aus Kunststoff oder Metall hergestellt sind.

14. Abgasturbolader mit einem Filterschalldämpfer gemäß einem der Ansprüche 1 bis 13, wobei der Filterschalldämpfer auf der Ansaugseite eines Verdichters des Abgasturboladers angeordnet ist.

15. Brennkraftmaschine mit einem Abgasturbolader gemäß Anspruch 14.

## Claims

1. Filter silencer (10), comprising:
- a front element (11),
- a rear element (12), and
- a plurality of damping elements (20) which are arranged between the front element (11) and the rear element (12),
wherein at least one damping element of the plurality of damping elements has a connecting opening (25) through which a connecting element (13) extends which connects the front element (11) to the rear element (12), wherein a first guide device (27A) for the damping elements (20) is provided on a side of the front element (11) which lies opposite the rear element (12), and/or wherein a second guide device (27B) for the damping elements (20) is provided on a side of the rear element (12) which lies opposite the front element (11), and wherein the at least one damping element of the plurality of damping elements (20) can be radially removed after removal of the connecting element (13).

2. Filter silencer (10) according to Claim 1, wherein the first guide device (27A) extends from the front element (11) in the direction of the rear element (12), and/or wherein the second guide device (27B) extends from the rear element (12) in the direction of the front element (11).

3. Filter silencer (10) according to Claim 1 or 2, wherein the first guide device (27A) has a plurality of first radial receptacles (271) for radial receiving of first ends (28) of the plurality of damping elements (20), and/or wherein the second guide device (27B) has a plurality of second radial receptacles (272) for radial receiving of second ends (29) of the plurality of damping elements (20).

4. Filter silencer (10) according to any one of Claims 1 to 3, wherein at least half of the plurality of damping elements has in each case a connecting opening (25) through which in each case a connecting element (13) extends which connects the front element (11) to the rear element (12), wherein half of the plurality of damping elements (20) can be radially removed after removal of the respective connecting element (13).

5. Filter silencer (10) according to any one of Claims 1 to 4, wherein the connecting element (13) is screwed to the rear element (12).

6. Filter silencer (10) according to any one of Claims 1 to 5, wherein the connecting opening (25) is formed by a tube element.

7. Filter silencer (10) according to any one of Claims 1 to 6, wherein the plurality of damping elements (20) are arranged radially around a central axis (16) of the filter silencer so that a flow channel (30) is formed in each case between adjacent damping elements, which flow channel (30) runs toward the central axis (16).

8. Filter silencer (10) according to any one of Claims 1 to 7, wherein the damping elements (20) comprise in each case an absorption element (21) which is surrounded at least partially by a damping plate (22).

9. Filter silencer (10) according to any one of Claims 1 to 8, wherein the damping elements (20) have a concave damping surface (20A) and a convex damping surface (20B).

10. Filter silencer (10) according to any one of Claims 1 to 9, wherein the damping elements (20) have a diffusor element (23) at their end pointing toward the central axis (16).

11. Filter silencer (10) according to Claim 10, wherein the diffusor element (23) is fastened to the front element (11) by means of a fastening element (26).

12. Filter silencer (10) according to any one of Claims 1 to 11, further comprising a filter plate (15) which is arranged on the circumference of the filter silencer, wherein the filter plate (15) is in contact with the front element (11) and the rear element (12), in particular wherein the filter plate (15) is held by means of a holding element (14) which is connected to the front element (11).

13. Filter silencer (10) according to any one of Claims 1 to 12, wherein the first guide device and/or the second guide device are produced from plastic or metal.

14. Exhaust gas turbocharger with a filter silencer according to any one of Claims 1 to 13, wherein the filter silencer is arranged on the intake side of a compressor of the exhaust gas turbocharger.

15. Internal combustion engine with an exhaust gas turbocharger according to Claim 14.

## Revendications

1. Filtre-silencieux (10), comportant:
- un élément frontal (11),
- un élément arrière (12), et
- une pluralité d'éléments d'amortissement (20) qui sont disposés entre l'élément frontal (11) et l'élément arrière (12), au moins un élément d'amortissement de la pluralité d'éléments d'amortissement comprenant une ouverture de liaison (25) à travers laquelle s'étend un élément de liaison (13), lequel relie l'élément frontal (11) à l'élément arrière (12), un premier dispositif de guidage (27A) pour les éléments d'amortissement (20) étant prévu sur un côté de l'élément frontal (11) qui est en regard de l'élément arrière (12), et/ou un deuxième dispositif de guidage (27B) pour les éléments d'amortissement (20) étant prévu sur un côté de l'élément arrière (12) qui est en regard de l'élément frontal (11), et l'au moins un élément d'amortissement de la pluralité d'éléments d'amortissement (20) pouvant être retiré radialement après le retrait de l'élément de liaison (13).

2. Filtre-silencieux (10) selon la revendication 1, le premier dispositif de guidage (27A) s'étendant à partir de l'élément frontal (11) en direction de l'élément arrière (12), et/ou le deuxième dispositif de guidage (27B) s'étendant à partir de l'élément arrière (12) en direction de l'élément frontal (11).

3. Filtre-silencieux (10) selon la revendication 1 ou 2, le premier dispositif de guidage (27A) comprenant une pluralité de premiers logements radiaux (271) pour le logement radial de premières extrémités (28) de la pluralité d'éléments d'amortissement (20), et/ou le deuxième dispositif de guidage (27B) comprenant une pluralité de deuxièmes logements radiaux (272) pour le logement radial de deuxièmes extrémités (29) de la pluralité d'éléments d'amortissement (20).

4. Filtre-silencieux (10) selon l'une des revendications 1 à 3, au moins la moitié de la pluralité d'éléments d'amortissement comprenant respectivement une ouverture de liaison (25) à travers laquelle s'étend respectivement un élément de liaison (13), lequel relie l'élément frontal (11) à l'élément arrière (12), la moitié de la pluralité d'éléments d'amortissement (20) pouvant être retirée radialement après le retrait de l'élément de liaison (13) respectif.

5. Filtre-silencieux (10) selon l'une des revendications 1 à 4, l'élément de liaison (13) étant vissé sur l'élément arrière (12).

6. Filtre-silencieux (10) selon l'une des revendications 1 à 5, l'ouverture de liaison (25) étant formée par un élément tubulaire.

7. Filtre-silencieux (10) selon l'une des revendications 1 à 6, la pluralité d'éléments d'amortissement (20) étant disposés radialement autour d'un axe central (16) du filtre-silencieux, de sorte qu'un canal d'écoulement (30) soit réalisé respectivement entre des éléments d'amortissement adjacents, lequel canal s'étend jusqu'à l'axe central (16).

8. Filtre-silencieux (10) selon l'une des revendications 1 à 7, les éléments d'amortissement (20) comportant respectivement un élément d'absorption (21), lequel est entouré au moins partiellement par une tôle d'amortissement (22).

9. Filtre-silencieux (10) selon l'une des revendications 1 à 8, les éléments d'amortissement (20) comprenant une surface d'amortissement concave (20A) et une surface d'amortissement convexe (20B).

10. Filtre-silencieux (10) selon l'une des revendications 1 à 9, les éléments d'amortissement (20) comprenant, à leur extrémité orientée vers l'axe central (16), un élément diffuseur (23).

11. Filtre-silencieux (10) selon la revendication 10, l'élément diffuseur (23) étant fixé à l'élément frontal (11) au moyen d'un élément de fixation (26).

12. Filtre-silencieux (10) selon l'une des revendications 1 à 11, comportant en outre une tôle de filtre (15), laquelle est disposée à la périphérie du filtre-silencieux, la tôle de filtre (15) étant en contact avec l'élément frontal (11) et l'élément arrière (12), la tôle de filtre (15) étant en particulier retenue au moyen d'un élément de retenue (14) qui est relié à l'élément frontal (11).

13. Filtre-silencieux (10) selon l'une des revendications 1 à 12, le premier dispositif de guidage et/ou le deuxième dispositif de guidage étant fabriqués à partir de matière synthétique et/ou de métal.

14. Turbocompresseur à gaz d'échappement comportant un filtre-silencieux selon l'une des revendications 1 à 13, le filtre silencieux étant disposé sur le côté aspiration d'un compresseur du turbocompresseur à gaz d'échappement.

15. Moteur à combustion interne comportant un turbocompresseur à gaz d'échappement selon la revendication 14.
